# EUROPÄISCHE PATENTSCHRIFT

(11) **EP 0 453 749 B1**
(45) Veröffentlichungstag und Bekanntmachung des Hinweises auf die Patenterteilung: **27.07.1994**
(21) Anmeldenummer: 91103780.2
(22) Anmeldetag: 13.03.1991
(51) Int. Cl.: B60K 23/02, F16D 25/08, F16D 25/14

(54) **Kupplung zwischen Motor und Getriebe in Kraftfahrzeugen**
Clutch between engine and gearbox for motor vehicles
Embrayage entre moteur et boîte de vitesses sur des véhicules

(30) Priorität: 27.04.1990 DE 4013667
(43) Veröffentlichungstag der Anmeldung: 30.10.1991
(73) Patentinhaber: MAN Nutzfahrzeuge Aktiengesellschaft, 80976 München (DE)
(72) Erfinder: Heuer, Fritz, W-8067 Petershausen (DE)

(56) Entgegenhaltungen:
- DE-A- 3 028 251
- DE-A- 3 218 933
- DE-A- 3 443 064
- GB-A- 2 102 906
- US-A- 4 579 209

## Beschreibung

Die Erfindung bezieht sich auf eine automatische Kupplung mit einer lernenden Steuerung für das Schaltgetriebe in einem Kraftfahrzeug, wobei als Betätigungseinrichtung für die Kupplung ein pneumatisch betriebener, federvorgespannter Kolbenzylinder mit einer Kupplungs-Sensorvorrichtung vorgesehen ist.

Herkömmliche Kupplungsysteme mit elektronisch gesteuerter elektrohydromechanischer oder elektromechanischer Betätigung sind bekannt. Sie sind wegen des großen Bauaufwandes sehr sperrig, teuer und zudem im Ansprechverhalten träge. Außerdem werden bei den hydromechanischen Ausführungen als Arbeitsmedium Bremsflüssigkeiten verwendet, die in der biologischen Verträglichkeit sehr kritisch erscheinen.

Es ist auch eine automatische Kupplung für das Schaltgetriebe in einem Kraftfahrzeug nach der DE-A-34 43 064 bekannt, bei der zur Betätigung der Kupplung ein Kolbenzylinder mit Federvorspannung vorgesehen ist, der einen Sensor für die Messung der Kolbenverschiebung aufweist, dessen Signale, auf die Steuerelektronik des Fahrzeuges geschaltet, die Parameter Kolbenstellung des Kolbens, Kupplungsverschleiß, Lastzustand und Kupplungsausrückung erfassen. Eine Selbstnachstellung mittels eines pneumatischen Zylinders ist aus der DE-A-37 19 399 bekannt.

Der Erfindung liegt die Aufgabe zugrunde, eine Kupplung mit optimiertem Ansprechverhalten und minimiertem Verschleiß zu schaffen.

Dies wird erfindungsgemäß dadurch erreicht, daß der Kolben des Druckluftzylinders mit einer Sensorstange verbunden ist, die in einem Teilbereich sägezahnartig oder dergleichen ausgebildet ist, wobei die Sägezähne auf einen induktiven Wegmesser geschaltet sind und die Sensorstange mit einem sich an einem Anschlag des Zylindergehäuses abstützenden Justierstift und mit dem Kolben über selbsthemmende Klemmelemente verbunden ist. Die geringe Masse des Arbeitsmediums Luft erlaubt eine schnelle Ansteuerung des Druckluftzylinders. Die Ansteuerung ist feinfühlig und auch bei niedrigen Temperaturen gut dosierbar. Durch die Ausrückwegsensierung ist es möglich, unter Einbeziehung der Motorund Getriebeeigangsdrehzahl, die Elektronik dahingehend lernfähig zu machen, daß diese die vollkommene Trennung der Kupplung erkennt und unnötig große Ausrückwege vermieden werden. Die Ausrückwegsensierung ist mechanisch an die Kupplung gekoppelt und mit keinerlei Verzerrungen wie Schlauchdehnung und Leckagen, wie es hydraulische Systeme mit sich bringen, behaftet. Durch Entfall der hydraulischen Ansteuerung entfällt auch das problematische Entlüften des Systems und eine ungenaue Sensierung durch Lufteinschlüsse bzw. Leckagen wird vermieden. Es kann auf umweltproblematische Medien verzichtet werden, da für die Steuerung nur Luft zum Einsatz kommt. Bei jedem erneuten Start des Motors kann der erforderliche Ausrückweg neu erlernt werden, und es werden einprogrammiert: Belagdicke, Griffigkeit, Isttemperatur und Feuchtigkeitsgrad. Durch das rasche Ansprechen der Ausrückung kann im Leerlauf des Motors die Kupplung entsprechend der Ungleichförmigkeit der Motordrehzahl kurz getaktet ausgerückt werden, wodurch dann auch die Dämpfer entfallen können. Die feine Dosierbarkeit erlaubt ein sensibles Ansteuern der Kupplung und kann Elastizitäten im Triebstrang unter Einbeziehung des Lastzustandes berücksichtigen. Die vom Wegmesser gezählten Zähne geben der Elektronik das Maß des Belagverschleißes an, mit den Grenzbedingungen, daß einmal die Belagstärke nicht voll ausgenützt wird und das andere Mal der Belag bis auf die Nieten verschlissen ist. Durch die Justierung wird die in der Länge genau definierte Sensorstange in die Lage gebracht, daß nach Belagverschleiß keine Sensorzähne vorhanden sind und über die Elektronik einer Belagverschleißanzeige aktiviert wird. Durch den Anschlag im Gehäuse kann die Sensorstange immer richtig justiert werden, so daß der Belagverschleiß weder zu früh noch zu spät angezeigt ist.

Gemäß einer Weiterbildung der Erfindung weist eine Notfahreinrichtung ein von der Steuerelektronik austeuerbares Rückschlagventil und ein vorzugsweise fußbetätigtes Pneumatikventil, das von einem Druckluftvorrat gespeist ist und den Kolben beaufschlagt, auf. Die integrierte Notfahreinrichtung kann aus Sicherheitsgründen vom Fahrerplatz aus bedient werden. Die Notfahreinrichtung ist systemkonform, da sie ebenfalls rein pneumatisch gesteuert ist.

Die Erfindung ist in einem Ausführungsbeispiel dargestellt und beschrieben.

Es zeigen:
- Fig. 1: eine automatische Kupplung mit Betätigungselement im Schnitt,
- Fig. 2: eine schematische Darstellung der Kupplungsbetätigung.

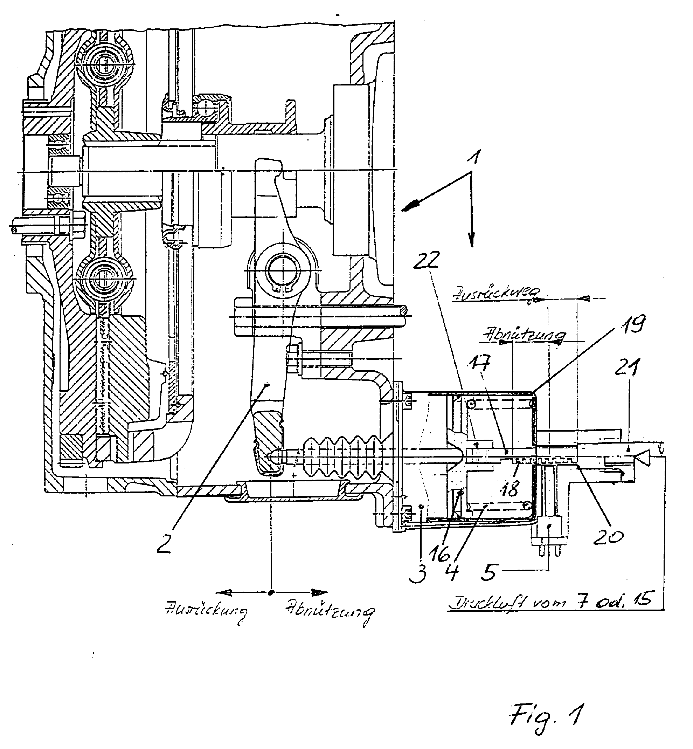

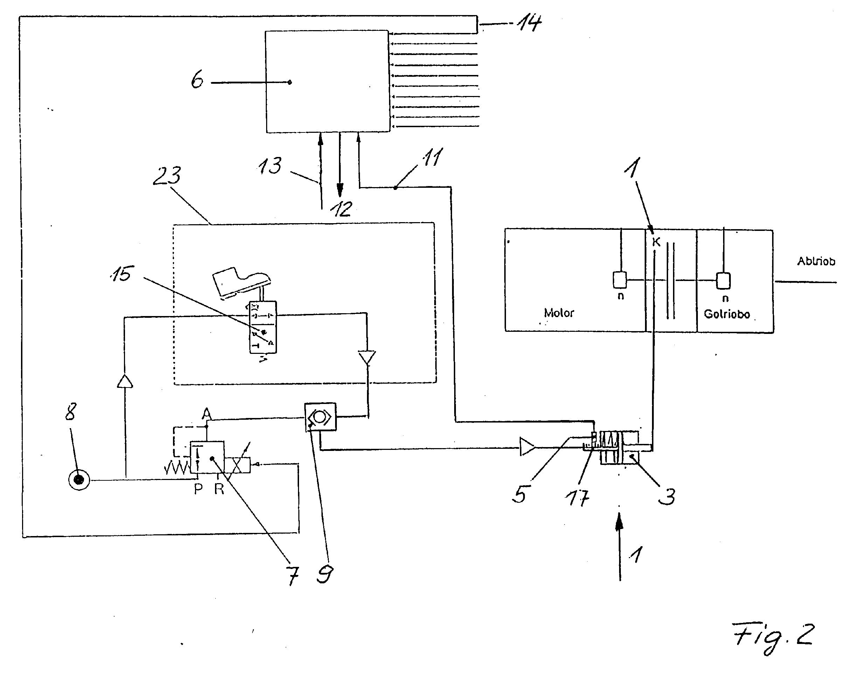

Auf der schematischen Darstellung nach Fig. 2 ist zu entnehmen, daß ein Motor und ein Schaltgetriebe mittels automatischer Kupplung 1 miteinander verbunden sind. Die Kupplung 1 wird über einen rein druckluftbeaufschlagten Kolbenzylinder 3 betätigt, wobei die Druckluft von einer Druckluftquelle 8 über ein Proportional-Druckregelventil 7 oder ein getaktetes 3/2-Wege-Ventil 7 in den Kolbenzylinder 3 eingespeist wird. Die jeweilige Stellung des Kolbens 16 wird über eine mit ihm verbundene Sensorstange 17, die auf einen elektronischen Weggeber 5 wirkt, als Maß der Kolbenstellung 11 in die Steuerelektronik 6 eingespeist. Die Steuerelektronik 6 bewertet das Signal Kolbenstellung 11 für weitere Signale: Kupplungsausrückung 14, Kupplungsverschleiß 12 und Lastzustand 13 wie auch ein Signal 10 auf das einstellbare Rückschlagventil 9 wirkt. Bei Betätigung des Ventils 10 wird ein Nebenkreis geschaltet, nämlich die Notfahrbetätigung 23, die, wenn das Rückschlagventil 10 wirksam gesetzt ist, über das Pneumatikventil 15, vorzugsweise fußbetätigt, erfolgen kann. Die Fig. 1 zeigt die automatische Kupplung 1, die durch den Ein- und Ausrückhebel 2 betätigt wird. Der Ein-und Ausrückhebel 2 wird von dem rein pneumatisch betätigten Kolbenzylinder 3 beaufschlagt, dessen Kolben 16 über Feder 4 der jeweiligen Verschleißsituation angepaßt wird. In dem Kolbenzylinder 3 wird Druckluft vom Proportional-Druckregelventil 7 bzw. vom getakteten 3/2-Wege-Ventil oder vom fußbetätigten Pneumatikventil 15 eingeleitet. Mit dem Kolben 16 des Kolbenzylinders 3 ist über selbsthemmende Elemente 22 die Sensorstange 17 verbunden, die in einem Teilbereich mit Zähnen 18 ausgebildet ist. Diese Zähne 18 geben Impulse auf den elektronischen Wegmesser 5, der diese, in der Anzahl abzählt, zur Registrierung in die Elektronikeinheit 6 zur dortigen Auswertung weiterleitet. Es ist weiterhin ein Justierstift 21 vorgesehen, der, mit der Sensorstange 17 verbunden, auf einen Anschlag 20 am Gehäuse 19 des Kolbenzylinders 3 eingestellt werden kann. Durch die so einstellbare Sensorstange können Toleranzen an der Kupplung ausgeschaltet werden, und es ist somit gewährleistet, daß auch der Elektronik die maximale Belagstärke angezeigt wird. Nach Anbau des Kolbenzylinders wird die Senorstange mit dem Justierstift 21 einmalig in die Grundstellung "maximale Kupplungsbelagstärke" gedrückt, wobei der Druckluftanschluß für die Betätigung erst nach der Justierung montiert werden kann, und somit die Neueinstellung nicht vergessen wird. Durch die Justierung wird die in der Länge genau definierte Sensorstange in die Lage gebracht, daß nach Belagverschleiß keine Sensorzähne mehr vorhanden sind und über die Elektronik eine Belagverschleißanzeige aktiviert wird.

Durch die Ausrückwegsensierung ist es möglich, unter Einbeziehung der Motor- und Getriebeeingangsdrehzahl, die Elektronik dahingehend lernfähig zu machen, daß diese die vollkommene Trennung der Kupplung erkennt und unnötig große Ausrückwege vermieden werden können. Die Ausrückwegsensierung ist mechanisch an die Kupplung gekoppelt und mit keinerlei Verzerrungen wie Schlauchdehnungen und Leckagen behaftet. Ebenso sind durch die rein mechanische Kopplung Elastizitäten der Steuermedien ausgeschaltet und somit Aufschaukeleffekte ausgeschlossen. Die Einfachheit des Systems gewährleistet, daß Störquellen absolut minimiert werden.

### Bezugszeichenliste

- 1: automatische Kupplung
- 2: Ein- und Ausrückhebel
- 3: Kolbenzylinder
- 4: Feder
- 5: Sensor (induktiver Wegmesser)
- 6: Steuerelektronik
- 7: Proportional-Druckregelventil, getaktetes 3/2-Wege-Ventil
- 8: Druckluftvorrat
- 9: entsperrbares Rückschlagventil
- 10: Signal-Rückschlagventil
- 11: Signal-Kolbenstellung
- 12: Signal-Kupplungsverschleiß
- 13: Signal-Lastzustand
- 14: Signal-Kupplungsausrückung
- 15: Pneumatikventil
- 16: Kolben von 3
- 17: Sensorstange
- 18: Sägezähne oder dergleichen
- 19: Zylindergehäuse
- 20: Anschlag an 19
- 21: Justierstift
- 22: selbsthemmende Klemmelemente
- 23: Notfahreinrichtung

## Patentansprüche

1. Automatische Kupplung mit einer lernenden Steuerung für das Schaltgetriebe in einem Kraftfahrzeug, wobei als Betätigungseinrichtung für die Kupplung ein pneumatisch betriebener, federvorgespannter Kolbenzylinder mit einer Kupplungshub-Sensoreinrichtung vorgesehen ist, dadurch gekennzeichnet, daß der Kolben (16) des Druckluftzylinders (3) mit einer Sensorstange (17) verbunden ist, die in einem Teilbereich sägezahnartig (18) oder dergleichen ausgebildet ist, wobei die Sägezähne (18) auf eine induktiven Wegmesser (5) geschaltet sind und die Sensorstange (17) mit einem sich an einen Anschlag (20) des Zylindergehäuses (19) abstützenden Justierstift (20) und mit dem Kolben (16) über selbsthemmende Klemmelemente (22) verbunden ist.

2. Automatische Kupplung nach Anspruch 1, dadurch gekennzeichnet, daß eine Notfahreinrichtung (23) ein von der Steuerelektronik (6) ansteuerbares Rückschlagventil (9) und ein, vorzugsweise fußbetätigtes Pneumatikventil (15), das von einem Druckluftvorrat (8) gespeist ist und den Kolbenzylinder (3) beaufschlagt, aufweist.

## Claims

1. An automatic clutch having a learning control mechanism for the gearbox in a motor vehicle, wherein a pneumatically operated, spring-loaded piston cylinder having a clutch-travel sensor device is provided as an actuating device for the clutch, characterised in that the piston (16) of the pneumatic cylinder (3) is connected to a sensor rod (17) having a portion thereof formed in a saw-toothed manner (18) or the like, the saw teeth (18) being connected to an inductive odometer (5), and the sensor rod (17) being connected to an adjusting pin (21) supported against a stop (20) of the cylinder housing (19) and to the piston (16) via self-locking clamping elements (22).

2. An automatic clutch according to claim 1, characterised in that an emergency driving arrangement (23) has a non-return valve (9) controllable by the control electronics (6), and a preferably foot-operated pneumatic valve (15) which is fed by a compressed-air supply (8) and acts upon the piston cylinder (3).

## Revendications

1. Embrayage automatique à commande autodidactique pour la boîte de vitesses d'un véhicule automobile, comprenant un vérin précontraint par un ressort actionné pneumatiquement comportant un dispositif de détection de course d'embrayage en tant que dispositif d'actionnement pour l'embrayage, caractérisé en ce que, le piston (16) du vérin à air sous pression (3) est relié à une barre de capteur (17) réalisée partiellement avec des dents de scie (18) ou moyens équivalents, les dents de scie (18) coopérant avec un capteur de course inductif (5), la barre de capteur (17) étant reliée à une tige d'ajustement prenant appui sur une butée (20) du boîtier (19 du vérin ainsi qu'à un piston (16) par des éléments auto-bloquants (22).

2. Embrayage automatique selon la revendication 1, caractérisé en ce qu'il comporte un dispositif de sécurité (23), une soupape anti-retour (9) commandés par le circuit de commande électronique (6) et une soupape pneumatique (15) actionnée avantageusement au pied, alimentée par le réservoir d'air sous pression (8) et commandant le vérin (3).
